# EUROPÄISCHE PATENTSCHRIFT

(11) **EP 0 483 492 B1**
(45) Veröffentlichungstag und Bekanntmachung des Hinweises auf die Patenterteilung: **21.12.1994**
(21) Anmeldenummer: 91115047.2
(22) Anmeldetag: 06.09.1991
(51) Int. Cl.: B29C 45/17

(54) **Stationärer Formträger an einer Kunststoff-Spritzgiessmaschine**
Stationary mould support for a plastic injection moulding machine
Porteur de moule stationnaire pour une machine à mouler par injection de matières plastiques

(30) Priorität: 31.10.1990 DE 4034577
(43) Veröffentlichungstag der Anmeldung: 06.05.1992
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 291 008
- DE-A- 2 302 167

## Beschreibung

Die Erfindung betrifft einen Formträger entsprechend dem Oberbegriff des Anspruches 1.
Bei einem bekannten Formträger dieser Art (DE-A-37 22 228) können wahlweise 'zweite' Spritzgießformen zum Einsatz kommen, deren nicht zentrale Angußöffnungen bei zentralem Formhohlraum unterschiedliche Positionen aufweisen. Unter diesen Voraussetzungen gelangt der plastifizierte Kunststoff beim Einspritzen über einen etwa parallel zur Schließrichtung der Formschließeinheit verlaufenden Angußkanal in den Formhohlraum, welcher Angußkanal am Rand des Formhohlraumes mündet. Ein solcher Anguß wird im folgenden als 'Parallelanguß' bezeichnet. Dies im Gegensatz zu einem senkrecht zur Schliefrichtung in die Trennebene der Spritzgießform erfolgenden Anguß. Beim bekannten Formträger sind im übrigen die Kolbenstangen mit ihren Anschlußenden bei Verschiebung der Spritzgießeinheit in T-förmigen Nuten des Formträgers geführt und dabei von vertikalen Nutenflanken des Formträgers hintergriffen. Beim Einspritzen des Kunststoffes bewirkt eine dem Anlagedruck des Plastifizierzylinders entgegengesetzte Kraft in den Kolbenstangen deren Verspannung in den Nutenflanken des Formträgers und somit eine Arretierung. Da notwendigerweise eine der Nuten oberhalb und eine andere unterhalb der Durchtrittsöffnung liegt, ist der bekannte Formträger lediglich für den Einsatz von Spritzgießeinheiten bestimmt und geeignet, deren symmetrisch zur Spritzachse liegende Kolbenstangen in einer Ebene angeordnet sind, die einen Winkel zur Horizontalen einschließt.

Die Erfindung geht von der in langjährigen Versuchen gewonnenen Erkenntnis aus, daß bei Herstellung von Präzisionsspritzteilen unterschiedlicher Gestalt und Größe und bei Verwendung von Kunststoffen mit unterschiedlichen physikalischen Eigenschaften mit Hilfe des Parallelangusses allen in der Praxis vorkommenden spritztechnischen Erfordernissen Rechnung getragen werden kann, indem jeweils die nach Gestalt des Spritzlings und nach den physikalischen Eigenschaften des Kunststoffes die strömungstechnisch günstigste Angußart gewählt werden kann, ohne daß es eines Umschwenkens der Spritzgießeinheit für einen Anguß in die Trennfuge der Spritzgießform bedarf.
Gemäß dieser Erkenntnis zielt die Erfindung darauf ab, einen Formträger der eingangs genannten Gattung derart weiterzubilden, daß auch Spritzgießeinheiten im Parallelanguß einsetzbar sind, deren Kolbenstangen in einer horizontalen Ebene liegen.

Diese Aufgabe wird durch einen Formträger mit den im Anspruch 1 genannten Merkmalen gelöst.

Vorteilhafte Weiterbildungen der Erfindung ergeben sich aus den abhängigen Ansprüchen 2 bis 10.

Bei einer solchen Lösung liegen zudem die prinzipiellen Voraussetzungen dafür vor, daß an einem bestimmten Formträger wahlweise Spritzgießeinheiten unterschiedlicher Größe im Parallelanguß eingesetzt werden können. Die Spritzachse der Spritzgießeinheit ist weitgehend stufenlos auf unterschiedliche Spritzgießformen einstellbar.

Beim Spritzbetrieb ist der Muffenträger in eingestellter Position mit dem Formträger mittels Gewindebolzen verspannt und dadurch arretiert. Bei Spritzbetrieb kann der Muffenträger jedoch auch auf andere Weise arretiert sein. Dies ist dann der Fall, wenn er generell mit Spiel in den Führungsorganen des Muffenträgers liegt. In diesem Fall ergibt sich eine Arretierung in Betriebsposition dadurch, daß der Muffenträger unter der Wirkung der durch den Anlagedruck des Plastifizierzylinders an der Spritzgießform bewirkten, dem Anlagedruck entgegengesetzten Zugkraft der Kolbenstangen unter geringfügiger Bewegung in Richtung der Spritzachse auf übergreifende Teile der Führungsorgane angepreßt wird. Bei fehlender Anlage des Plastifizierzylinders, also bei Verschiebung der Plastifiziereinheit, wird der Muffenträger automatisch mitgeführt. Selbstverständlich kann der Muffenträger auch manuell auf seine neue Betriebsposition überführt werden, wenn die Kolbenstangen 30 der Spritzgießeinheit aus den Muffen des Muffenträgers herausgenommen sind.

Bei einer weiteren Ausgestaltung der Erfindung nach den Ansprüchen 2 und 3 wird eine einfache und zuverlässige Führung sowie Arretierung des Muffenträgers in Führungsorganen erreicht, die einer besonders rationellen Fertigung zugänglich sind.

Bei einer Ausgestaltung nach Anspruch 4 wird die durch die axiale Zugkraft der Kolbenstangen hervorgerufene Biegebeanspruchung des Muffenträgers vermindert, indem dessen Verankerungen (Gewindebolzen 26) im Formträger den Angriffspunkten der Kolbenstangen angenähert sind. Außerdem kann ein Muffenträger mit relativ kleinen Abmessungen eingesetzt werden.

Nach einer Ausbildung nach den Ansprüchen 5,8 und 9 können Kolbenstangen mit unterschiedlichem Durchmesser oder mit unterschiedlichem gegenseitigen Abstand angeschlossen werden.

Bei einer weiteren Ausgestaltung nach Anspruch 6 ist die 'Ausnehmung' für den Durchtritt des Plastifizierzylinders durch den Muffenträger an den jeweiligen Durchmesser des Plastifizierzylinders anpaßbar.

Nach einer weiteren Ausgestaltung nach Anspruch 10 ist der Muffenträger bei fehlendem Anlagedruck des Plastifizierzylinders prinzipiell mit Spiel in den Führungsorganen verschiebbar.

Nachstehend wird die Erfindung anhand der Zeichnung an einigen Ausführungsbeispielen erläutert.

Es zeigen:
- Fig. 1 und 2: Den Formträger mit einem Muffenträger mit gesonderten Muffenelementen bei Einstellung auf einen zentralen und einen nicht zentralen Anguß,
- Fig. 3: den Formträger gemäß den Fig. 1 und 2 ohne Muffenträger,
- Fig. 4: den Muffenträger gemäß den Fig. 1 und 2 in Seitenansicht mit aufgespannter Spritzgießform sowie angeschlossenem Plastifizierzylinder im Schnitt nach Linie 4-4 von Fig. 1,
- Fig. 5: einen Ausschnitt aus Fig. 4 in vergrößerter Darstellung,
- Fig. 6 und 7: den Muffenträger gemäß den Fig. 1 und 2 mit anderen Muffenelementen in Stirn- und Seitenansicht (Fig. 7 ist ein Schnitt nach Linie 7-7 von Fig. 6),
- Fig. 8 und 9: den Muffenträger in einer Darstellung gemäß den Fig. 6 und 7 ohne Muffenelemente,
- Fig. 10 und 11: Muffenelemente gemäß den Fig. 1 und 2 einerseits und gemäß den Fig. 6 und 7 andererseits je in vergrößerter Darstellung,
- Fig. 12 und 13: den einen Teil eines zweiteilig ausgebildeten Muffenträgers in Stirn- und Seitenansicht,
- Fig. 14: einen Muffenträger mit angeformten Muffen in Stirn- und Seitenansicht,
- Fig. 15: eine Seitenansicht des Muffenträgers gemäß Fig. 14.

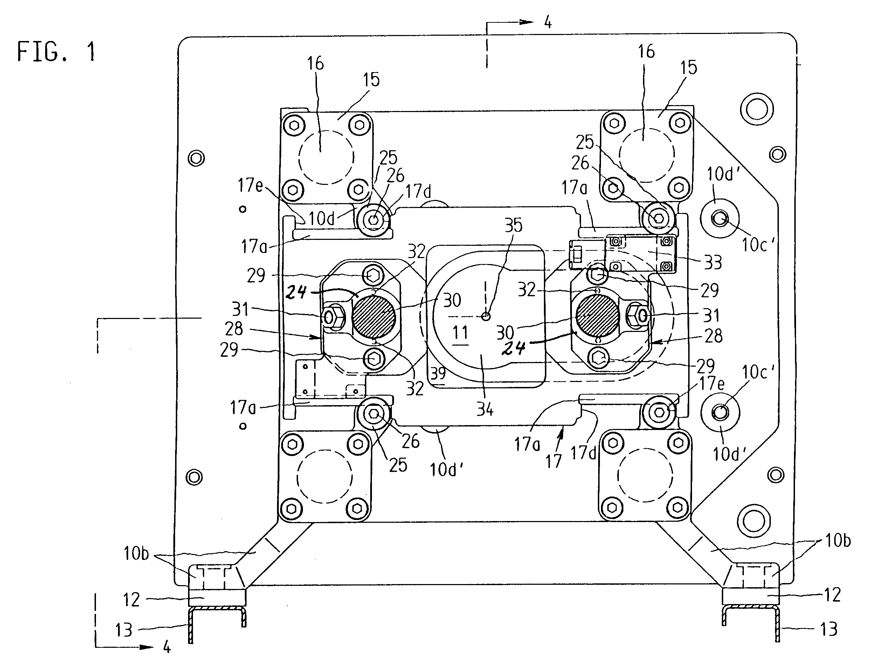

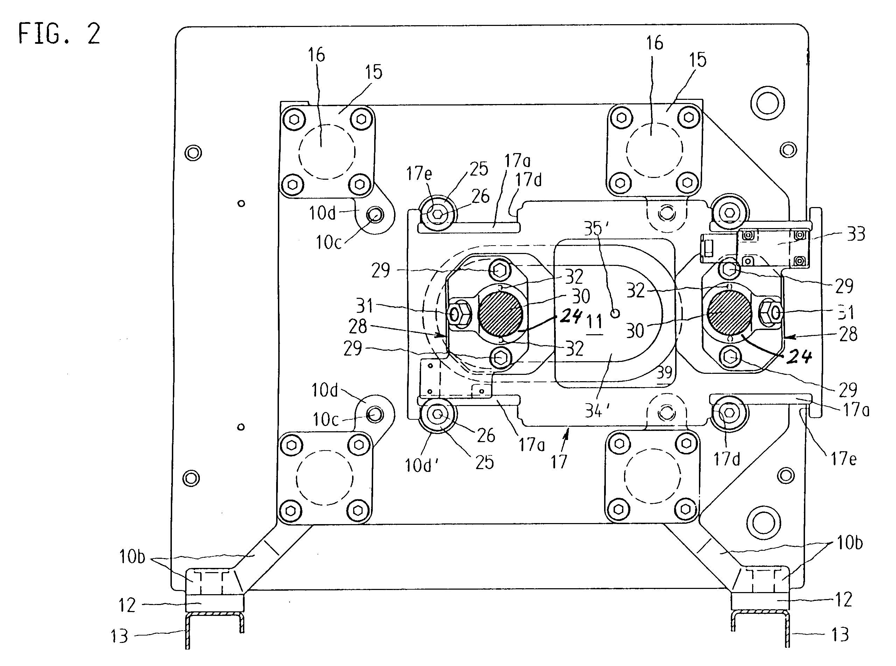

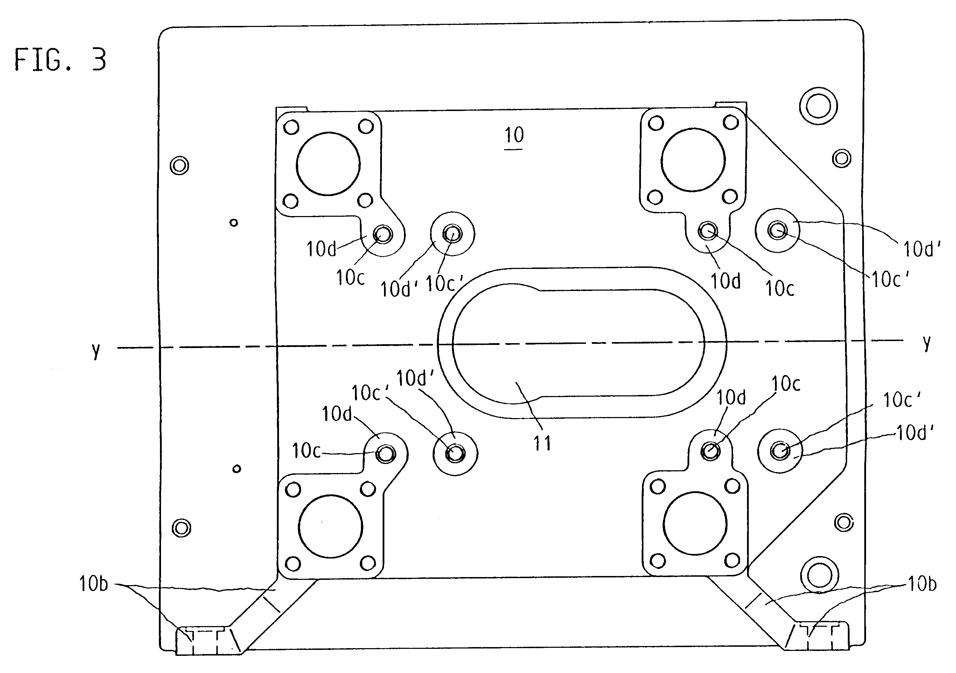

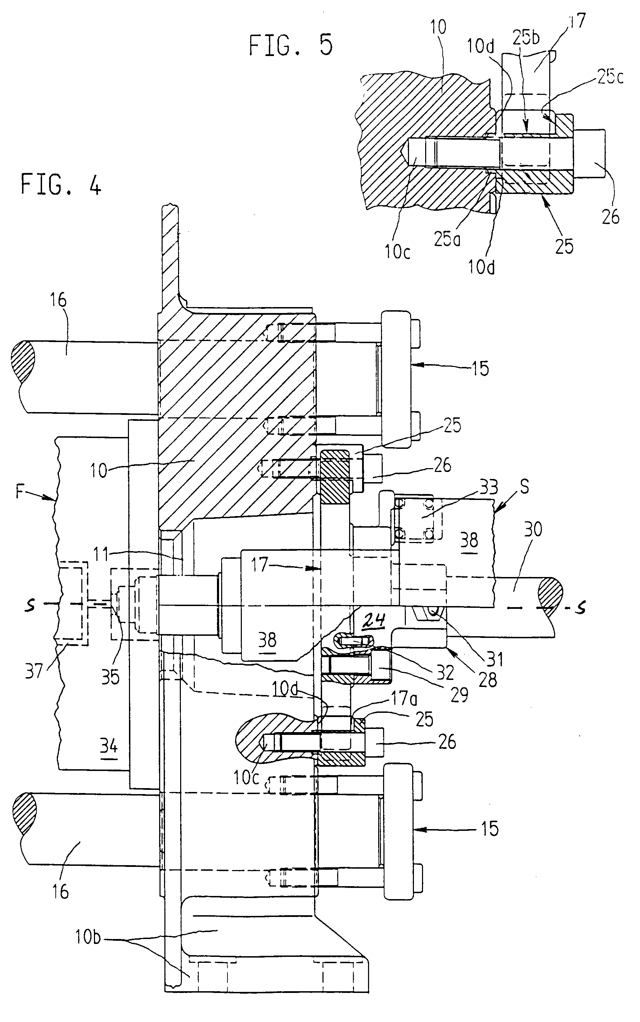

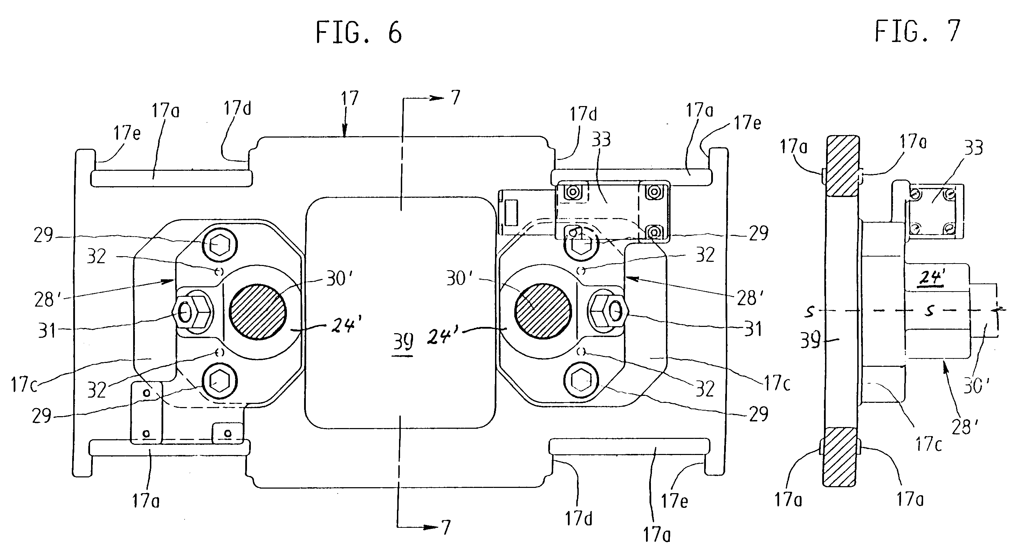

Der stationäre Formträger 10 ist Bestandteil der horizontal schließenden Formschließeinheit F (Fig. 4) einer Kunststoff-Spritzgießmaschine, die mit einer horizontal einspritzenden Spritzgießeinheit S (Fig. 4) versehen ist. Er ist über Zentrierteile 10b auf Schienen 12 eines Maschinengestells 13 abgestützt. Auf dem Formträger 10 ist eine erste Spritzgießform 34 (Fig. 4) mit zentraler Angußöffnung 35 und zentralem Formhohlraum 37 aufspannbar. Wahlweise sind auf den Formträger 10 jedoch auch unterschiedliche 'zweite' Spritzgießformen 34' mit nicht zentraler Angußöffnung 35' und zentralem Formhohlraum aufspannbar. In die Spritzgießformen 34,34' kann plastifiziertes Kunststoffmaterial mittels der quer zu ihrer Spritzachse s-s in horizontaler Richtung verschiebbaren Spritzgießeinheit S eingespritzt werden. Die Einspritzung kann in zwei entgegengesetzten extremen Verschiebepositionen und in Positionen, die zwischen diesen extremen Verschiebepositionen liegen, nach Parallelverschiebung der Spritzgießeinheit erfolgen, wobei die Spritzachse parallel zur Schließrichtung der Formschließeinheit verläuft. Diese Art des Angusses wird daher im folgenden als 'Parallelanguß' bezeichnet. Der Formträger 10 weist eine im Bereich seiner horizontalen Symmetrieebene y-y (Fig. 3) angeordnete, in Verschieberichtung verlängerte Durchtrittsöffnung 11 für den Plastifizierzylinder 38 (Fig. 4) der Spritzgießeinheit S auf. Der Plastifizierzylinder ist mittels hydraulischer Antriebszylinder an die jeweils eingespannte Spritzgießform 34 bzw. 34' anlegbar. Die Kolbenstangen 30 dieser Antriebszylinder erstrecken sich bis zum Formträger 10. Beim Verschieben der Spritzgießeinheit S sind die freien Enden der Kolbenstangen 30 in Führungselementen 25 des Formträgers 10 mittelbar geführt. Diese Führungselemente 25 liegen links und rechts der Durchtrittsöffnung 11. Die genannte mittelbare Führung erfolgt dadurch, daß die Enden symmetrisch zur Spritzachse (s-s) liegender Kolbenstangen 30 in Muffen 24, 24', 24'' wenigstens eines in den Führungselementen 25 verschiebbaren Mufffenträgers 17; 17' ;17'' aufgenommen sind. Der Muffenträger weist zwischen seinen Muffen eine Ausnehmung 39 für den Durchtritt des Plastifizierzylinders 38 auf. Der Muffenträger überbrückt die Durchtrittsöffnung 11 des Formträgers 10 in den vom Plastifizierzylinder 38 nicht durchgriffenen Bereichen. In den beiden extremen, einander entgegengesetzten Verschiebepositionen der Spritzgießeinheit und somit der Kolbenstangen 30 überdeckt der Muffenträger die Durchtrittsöffnung 11 je etwa hälftig, wie aus den Fign. 1 und 2 ersichtlich. Die Führungselemente 25 sind im Formträger 10 verankert. Sie hintergreifen die obere und untere Längskante des plattenartigen Muffenträgers 17; 17' ;17'' in plangeschliffenen Abschnitten 17a. Der zweiseitig symmetrische Formträger weist vier solcher Abschnitte auf, die symmetrisch zu den Symmetrieebenen des Muffenträgers angeordnet sind. Wie aus den Fign. 7,13,15 erkennbar, heben sich die fein geschliffenen Gleit- bzw. Spannflächen der genannten Abschnitte reliefartig aus den beidseitigen Oberflächen des Muffenträgers 17 hervor. Der Muffenträger ist mit dem Formträger 10 in unterschiedlichen Verschiebepositionen verspannbar. In jedem der zylindrischen Führungselemente 25 ist eine einem Zylindersegment entsprechende Ausnehmung vorgesehen. Durch diese Ausnehmung ergibt sich in jedem Führungselement eine horizontale Führungsfläche 25b und eine vertikale Führungsfläche 25c (Fig. 5) für den Muffenträger 17; 17' ;17''. Die mit axialen Zentrierflanschen 25a versehenen Führungselemente 25 sind mittels koaxialer Gewindebolzen 26 mit dem Formträger 10 zentrierend verspannbar. Wie insbesondere aus den Fign. 1,2 in Verbindung mit Fig. 3 ersichtlich, befinden sich die Gewindebolzen 26 beim Einspritzen des Kunststoffmaterials in einer wahlweise eingespannten zweiten Spritzgießform 34' (Fig. 2) im Gewindeeingriff mit Gewindebohrungen 10c' (Fig. 3) des Formträgers 10, die sich in Verschieberichtung im Abstand von Gewindebohrungen 10c befinden, in welche die Gewindebolzen 26 beim Einspritzen in die erste Spritzgießform 34 eingreifen.

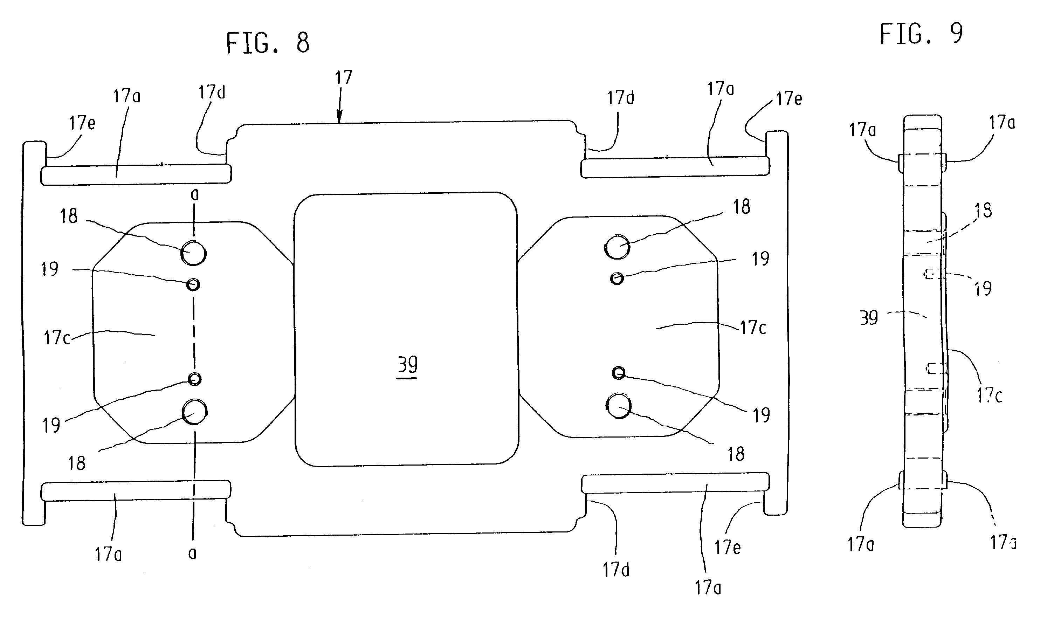

Im Ausführungsbeispiel der Fign. 1-11 ist ein erstes Paar von Muffenelementen 28 mit angeformten Muffen 24 und ein zweites Paar von Muffenelementen 28' mit angeformten Muffen 24' alternativ auf plangeschliffene Spannflächen 17c des Muffenträgers 17 mittels Spannbolzen 29 aufspannbar. Die Muffenelemente 28 und 28' sind mittels Zentrierstiften 32 des Muffenträgers 17 zentrierbar. Diese Zentrierstifte liegen mit den Spannbolzen 29 in einer vertikalen Ebene a-a (Fig. 8). Die Muffenelemente 28,28' der genannten Paare unterscheiden sich durch unterschiedlichen gegenseitigen Abstand und unterschiedliche lichte Weite ihrer Muffen 24, 24' voneinander.

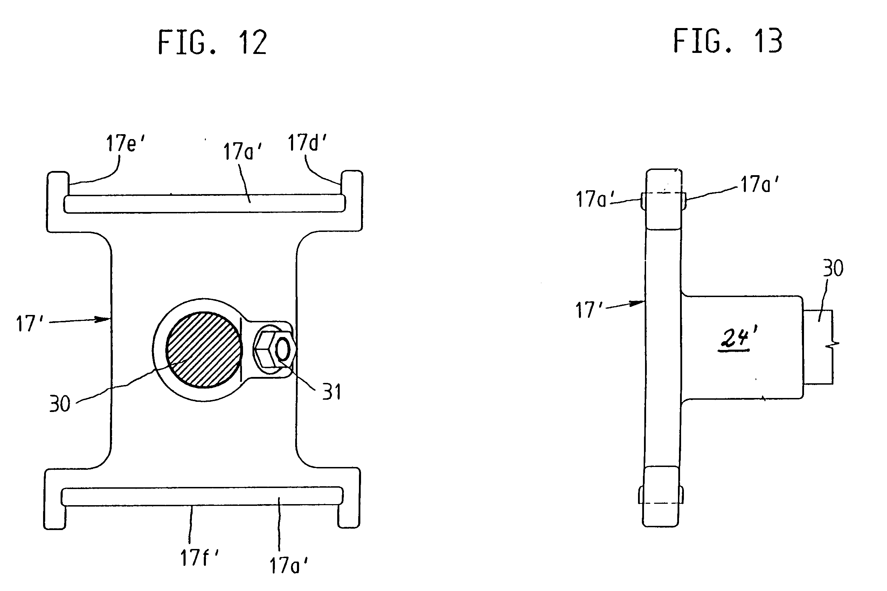

Im Ausführungsbeispiel der Fig. 12 und 13 ist der Muffenträger 17' zweiteilig ausgebildet. Der Muffenträger 17' ist dadurch gebildet, daß zwei der in Fig. 12 und 13 gezeigten Muffenträgerteile nebeneinander angeordnet sind. Die plangeschliffenen Abschnitte 17a' des einen Muffenträgerteiles sind dabei von Führungselementen hintergriffen, die in der linken Hälfte des Formträgers angeordnet sind. Die feingeschliffenen Abschnitte 17a' des anderen Muffenträgerteils sind von den Führungselementen 25 hintergriffen, die in der rechten Hälfte des Formträgers 10 verankert sind. Somit begrenzen die der Spritzachse zugewandten Kanten der beiden Muffenträgerteile eine Ausnehmung 39 für den Durchgriff des Plastifizierzylinders 38. Die beiden miteinander identischen Muffenträgerteile weisen angeformte Muffen 24' auf.

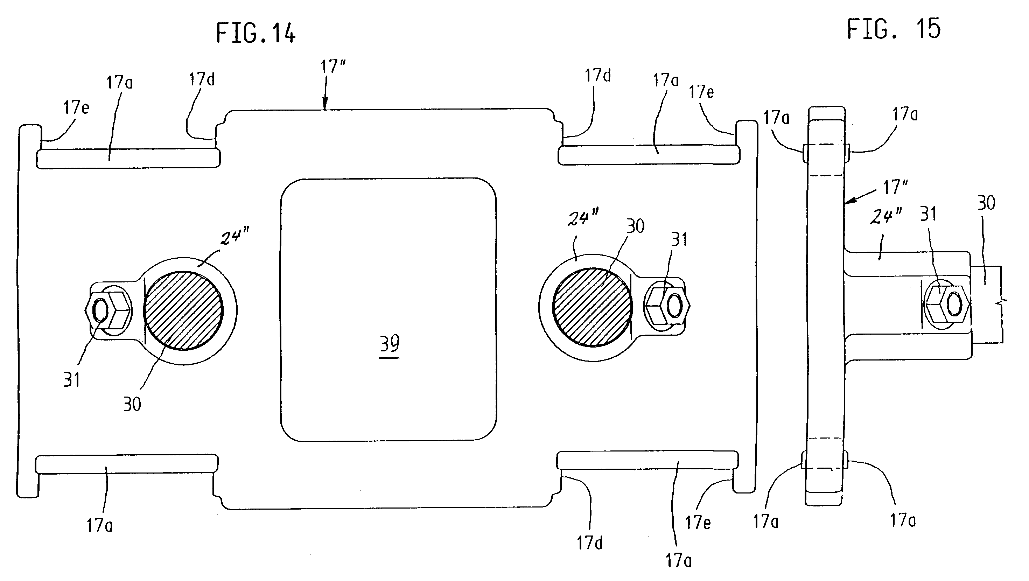

Im Beispiel der Fig. 14 und 15 sind die Muffen 24'' an einem einstückigen Muffenträger 17'' angeformt. In diesem Falle können dem Formträger zwei oder mehrere solcher Muffenträger 17'' zugeordnet sein, welche sich durch einen unterschiedlichen gegenseitigen Abstand und/oder eine unterschiedliche lichte Weite ihrer Muffen voneinander unterscheiden.

In besonderen Fällen kann es auch zweckmäßig sein, an den Muffenträger gemäß Fig. 12-14 zwei Muffenpaare anzuformen, welche sich durch unterschiedlichen gegenseitigen Abstand und/oder unterschiedliche lichte Weite ihrer Muffen 24', 24'' voneinander unterscheiden.

Generell können sämtliche oben beschriebene Muffenträger 17; 17' ;17'' beim Verschieben der Spritzgießeinheit mit Spiel in den Führungselementen 25 verschiebbar sein. Dies ist dann der Fall, wenn die axiale Tiefe der Führungselemente 25 größer ist als die Dicke der Trägerplatte 17 im Bereich ihrer Abschnitte 17a. In diesem Falle ist der Muffenträger 17 bzw. 17' bzw. 17'' im Gefolge einer geringfügigen Arretierbewegung in Richtung der Spritzachse s-s in seiner Position durch Verspannung mit den vertikalen Führungsflächen (Fig. 5) der Führungselemente arretierbar. Eine solche Verspannung ergibt sich automatisch, wenn der Plastifizierzylinder 38 mit Druck auf die Spritzgießform aufgelegt wird.

In allen Ausführungsbeispielen sind in den plan geschliffenen Abschnitten 17a des Muffenträgers 17;17';17'' Gleitflächen gebildet, die einerseits an den vertikalen Führungsflächen 25c der Führungselemente 25 bzw. an ringförmigen Führungsflächen 10d des Formträgers 10 geführt sind. Auch diese Führungsflächen 10d sind reliefartig von der rückwärtigen Oberfläche des Formträgers 10 abgesetzt. Die Abschnitte 17a sind von vertikalen Anlageflächen 17d,17e begrenzt, welche durch vertikale Kanten des Muffenträgers gebildet sind. Diese Anlageflächen begrenzen beidseits den Verschiebeweg des Muffenträgers. In den Muffen des Muffenträgers sind die Kolbenstangen 30 durch Schraubenbolzen 31 axial gesichert.

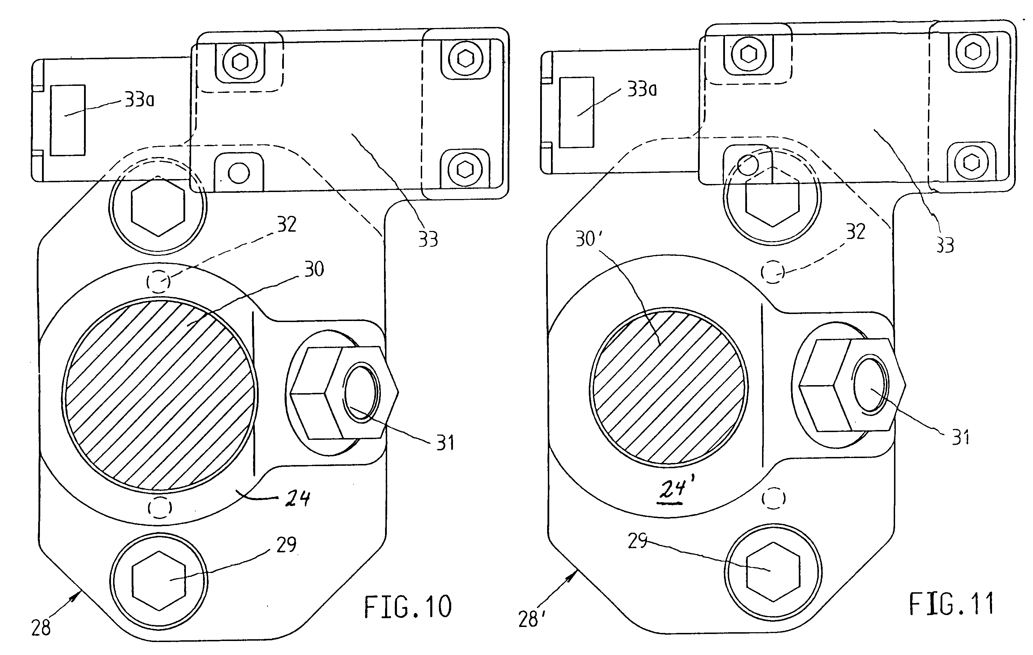

Wie aus den Fign. 1,2,6,10 und 11 ersichtlich, ist an jeweils eines der Muffenelemente 28,28' ein Sicherheitsschalter 33 befestigt, der den Stromkreis der Spritzgießeinheit nur dann geschlossen hält, wenn in seine Kodieröffnung 33a (Fig. 10 und 11) der schaltende Finger eines kritische Teile im Bereich der Angußöffnung abdeckenden Schutzschiebers eintaucht.

Mit 18 (Fig. 8) sind Gewindebohrungen für die Spannbolzen 29 und mit 19 Aufnahmebohrungen für die Zentrierstifte des Formträgers bezeichnet.

## Patentansprüche

1. Stationärer Formträger (10) einer Kunststoff-Spritzgießmaschine mit horizontal schließender Formschließeinheit (F in Fig. 4) und horizontal einspritzender Spritzgießeinheit (S in Fig. 4), auf welchem Formträger (10) eine erste Spritzgießform (34) mit zentraler Angußöffnung (35) und zentralem Formhohlraum (37 in Fig. 4) und wahlweise eine zweite Spritzgießform (34') mit nicht zentraler Angußöffnung (35') und zentralem Formhohlraum (37) aufspannbar ist, in welche Spritzgießformen (34;34') plastifiziertes Kunststoffmaterial mittels der quer zu ihrer Spritzachse (s-s) in horizontaler Richtung in zwei entgegengesetzte extreme Verschiebepositionen verschiebbaren Spritzgießeinheit (S) im Paralellanguß einspritzbar ist, mit einer im Bereich seiner horizontalen Symmetrieebene (y-y in Fig. 3) angeordneten, in Verschieberichtung verlängerten Durchtrittsöffnung (11) für den Plastifizierzylinder (38 in Fig. 4) der Spritzgießeinheit (S), welcher mittels hydraulischer Antriebszylinder an die Spritzgießform (34;34') anlegbar ist, sowie mit Führungselementen (25) für die sich bis zum Formträger (10) erstreckenden und beim Verschieben der Spritzgießeinheit (S) horizontal geführten Kolbenstangen (30) der Antriebszylinder, die (30) links und rechts der Durchtrittsöffnung (11) angeordnet sind und mit Mitteln zum axialen Festlegen der Kolbenstangen (30) in ihrer jeweiligen Position,
dadurch gekennzeichnet, daß die freien Enden von symmetrisch zur Spritzachse (s-s) liegenden Kolbenstangen (30) der Spritzgießeinheit in Muffen (24,24' ,24'') wenigstens eines in den Führungselementen (25) verschiebbaren Muffenträgers (17; 17'; 17'') aufgenommen sind, der zwischen seinen Muffen (24, 24', 24'') eine Ausnehmung (39) für den Durchtritt des Plastifizierzylinders (38) aufweist und die Durchtrittsöffnung (11) des Formträgers (10) in den vom Plastifizierzylinder (38) nicht durchgriffenen Bereichen überbrückt.

2. Formträger nach Anspruch 1, dadurch gekennzeichnet, daß Führungselemente (25) im Formträger (10) verankert sind und die obere und untere Längskante des plattenartigen Muffenträgers (17; 17'; 17'') in plan geschliffenen Abschnitten (17a) hintergreifen, welcher Muffenträger mit Hilfe der Führungselemente (25) mit dem Formträger (10) in unterschiedlichen Verschiebepositionen verspannbar ist.

3. Formträger nach Anspruch 2, dadurch gekennzeichnet, daß in den zylindrischen Führungselementen (25) zur Bildung horizontaler (25b) und vertikaler Führungsflächen (25c) je eine einem Zylindersegment entsprechende Ausnehmung vorgesehen ist und daß die mit axialen Zentrierflanschen (25a in Fig. 5) versehenen Führungselemente (25) mittels koaxialer Gewindebolzen (26) mit dem Formträger (10) zentrierend verspannbar sind.

4. Formträger nach Anspruch 3, dadurch gekennzeichnet, daß die Gewindebolzen (26) beim Einspritzen des Kunststoffmaterials in die wahlweise eingespannte zweite Spritzgießform (34' in Fig. 2) in Gewindebohrungen (10c' in Fig. 3) des Formträgers (10) eingreifen, die sich in Verstellrichtung im Abstand von Gewindebohrungen (10c) befinden, in welche die Gewindebolzen (26) beim Einspritzen in die erste Spritzgießform (34) eingreifen.

5. Formträger nach einem der vorhergehenden Ansprüche, dadurch gekennzeichnet, daß ein erstes Paar von Muffenelementen (28) mit angeformten Muffen (24) und ein zweites Paar von Muffenelementen (28') mit angeformten Muffen (24') alternativ auf plangeschliffene Spannflächen (17c) des Muffenträgers (17) mittels Spannbolzen (29) aufspannbar und dabei mittels Zentrierstifte (32) des Muffenträgers (17) zentrierbar sind, die in einer vertikalen Ebene (a-a) mit den Spannbolzen (29) liegen, wobei die Muffenelemente (28;28') der beiden Paare sich durch unterschiedlichen gegenseitigen Abstand und/oder unterschiedliche lichte Weite ihrer Muffen voneinander unterscheiden.

6. Formträger nach einem der vorhergehenden Ansprüche, dadurch gekennzeichnet, daß der Muffenträger (17') zweiteilig ausgebildet und seine Ausnehmung (39) von zwei identischen Muffenträgerteilen begrenzt ist.

7. Formträger nach einem der Ansprüche 1 bis 4 und 6, dadurch gekennzeichnet, daß die Muffen (24' ,24'') an den Muffenträger (17' ;17'') angeformt sind (Fig. 12-15).

8. Formträger nach Anspruch 7, dadurch gekennzeichnet, daß ihm wenigstens zwei Muffenträger (17'') zugeordnet sind, welche sich durch einen unterschiedlichen gegenseitigen Abstand und/oder eine unterschiedliche lichte Weite ihrer Muffen (24'') voneinander unterscheiden.

9. Formträger nach Anspruch 7, dadurch gekennzeichnet, daß an den Muffenträger (17' ;17'') zwei Muffenpaare angeformt sind, welche sich durch unterschiedlichen gegenseitigen Abstand und/oder unterschiedliche lichte Weite ihrer Muffen (24' ,24'') voneinander unterscheiden.

10. Formträger nach einem der vorhergehenden Ansprüche, dadurch gekennzeichnet, daß der Muffenträger (17;17' ;17'') beim Verschieben der Spritzgießeinheit mit Spiel in den Führungselementen (25) verschiebbar und im Gefolge einer geringfügigen Arretierbewegung in Richtung der Spritzachse (s-s) in seiner Position durch Verspannung mit den vertikalen Führungsflächen (25c) arretierbar ist.

## Claims

1. Stationary mould carrier (10) of a plastics material injection moulding machine including a horizontally closing mould closing unit (F in Figure 4) and a horizontally injecting injection moulding unit (S in Figure 4), on which mould carrier (10) can be clamped a first injection mould assembly (34) with a central injection opening (35) and a central mould cavity (37 in Figure 4) and selectively a second injection mould assembly (34') with a non-central injection opening (35') and a central mould cavity (37), into which injection mould assemblies (34;34') plasticised plastics material is injectable in parallel through the intermediary of the injection moulding unit (S), which is displaceable in the horizontal direction at right angles to its injection axis (s-s) into two extreme opposing positions of displacement, including an through-aperture (11) for the plasticising cylinder (38 in Figure 4) of the injection moulding unit (S), which through-aperture is elongated in the direction of displacement and is disposed in the region of its horizontal plane of symmetry (y-y in Figure 3), which plasticising cylinder is adapted to be forced against the injection mould assembly (34;34') through the intermediary of hydraulic drive cylinders, also including guide elements (25) for the piston rods (30) of the drive cylinders, which piston rods extend up to the mould carrier (10), are guided horizontally when the injection moulding unit (S) is displaced and are disposed to the left and to the right of the through-aperture (11) and including means for the axial fixing of the piston rods (30) in their respective position, characterised in that the free ends of the piston rods (30) of the injection moulding unit, which piston rods are symmetrical to the injection axis (s-s), are accepted in sleeves (24,24',24'') of at least one sleeve carrier (17;17''), which is displaceable in the guide elements (25), has a recess (39) between its sleeves (24,24',24'') for receiving the plasticising cylinder (38) and bridges the through-aperture (11) of the mould carrier (10) in the regions not occupied by the plasticising cylinder (38).

2. Mould carrier according to claim 1, characterised in that guide elements (25) are anchored in the mould carrier (10) and the upper and lower longitudinal edges of the plate-like sleeve carrier (17;17'') engage behind in surface-ground portions (17a), which sleeve carrier can be locked with the help of the guide elements (25) against the mould carrier (10) in various positions of displacement.

3. Mould carrier according to claim 2, characterised in that a recess is provided in each of the cylindrical guiding elements (25), corresponding to a segment of the cylinder, to form horizontal (25b) and vertical guiding surfaces (25c) and in that the guiding elements (25), which are provided with axial centering flanges (25a in Figure 5), can be locked in a centering manner against the mould carrier (10) by means of coaxial threaded bolts (26).

4. Mould carrier according to claim 3, characterised in that the threaded bolts (26) engage in threaded bores (10c' in Figure 3) of the mould carrier (10) when the plastics material is injected into the selectively clamped second injection mould assembly (34' in Figure 2) , which threaded bores are situated in the direction of the shifting movement at a distance from the threaded bores (10c), into which the threaded bolts (26) engage during the injection process into the first injection mould assembly (34).

5. Mould carrier according to one of the preceding claims, characterised in that a first pair of sleeve elements (28) with integrally formed sleeves (24) and a second pair of sleeve elements (28') with integrally formed sleeves (24') can be clamped alternatively onto surface-ground clamping surfaces (17c) of the sleeve carrier (17) through the intermediary of clamping bolts (29) and can be centred there through the intermediary of centering pins (32) of the sleeve carrier (17), which pins lie in a vertical plane (a-a) with the clamping bolts (29), the sleeve elements (28;28') of the two pairs differing from each other as regards variable spacing one between the other and/or the inside width of their sleeves.

6. Mould carrier according to one of the preceding claims, characterised in that the sleeve carrier (17') consists of two parts and its recess (39) is defined by two identical sleeve carrier parts.

7. Mould carrier according to one of the claims 1 to 4, and 6, characterised in that the sleeves (24', 24'') are integrally formed with the sleeve carrier (17'; 17'') (Figures 12.-15).

8. Mould carrier according to claim 7, characterised in that at least two sleeve carriers (17'') are associated therewith, which differ from each other as regards variable spacing one between the other and/or the inside width of their sleeves (24'').

9. Mould carrier according to claim 7, characterised in that two pairs of sleeves are integrally formed with the sleeve carrier (17'; 17''), which differ from each other as regards variable spacing one between the other and/or the inside width of their sleeves (24', 24'').

10. Mould carrier according to one of the preceding claims, characterised in that the sleeve carrier (17; 17'; 17'') is displaceable with backlash in the guide elements (25) when the injection moulding unit is displaced and is blockable in its position following a slight locking movement in the direction of the injection axis (s-s) by a clamping against the vertical guiding surfaces (25c).

## Revendications

1. Porte-moules stationnaire (10) d'une machine de moulage de matières plastiques par injection munie d'un groupe (F sur la figure 4) de fermeture des moules, assurant une fermeture horizontale et d'un groupe (S sur la figure 4) de moulage par injection, provoquant une injection horizontale, porte-moules (10) sur lequel peuvent être abloqués un premier moule (34) de coulée par injection, présentant un orifice central d'arrivée (35) et une cavité centrale de moulage (37 sur la figure 4) et , sélectivement, un second moule (34') de coulée par injection, présentant un orifice d'arrivée non central (35') et une cavité centrale de moulage (37), moules (34 , 34') de coulée par injection dans lesquels une matière plastifiée peut être injectée par amenée parallèle, au moyen du groupe (S) de moulage par injection pouvant coulisser dans le sens horizontal , transversalement par rapport à l'axe d'injection (s-s) desdits moules, vers deux positions extrêmes opposées prises par coulissement ; ledit porte-moules comprenant un orifice (11) qui se trouve au voisinage de son plan horizontal de symétrie (y-y sur la figure 3) , est prolongé dans la direction du coulissement et autorise le passage du cylindre de plastification (38 sur la figure 4) du groupe (S) de moulage par injection, pouvant être engagé, au moyen de vérins hydrauliques d' entraînement, sur le moule (34 ; 34') de coulée par injection ; des éléments (25) de guidage des tiges (30) des pistons des vérins d'entraînement, qui s'étendent jusqu'au porte-moules (10) , sont guidées horizontalement lors du coulissement du groupe (S) de moulage par injection et sont disposées à gauche et à droite de l'orifice de passage (11) ; et des moyens de verrouillage axial des tiges (30) des pistons dans leur position considérée, caractérisé par le fait que les extrémités libres de tiges (30) des pistons du groupe de moulage par injection, agencées symétriquement par rapport à l'axe d'injection (s-s) , sont reçues par des manchons (24, 24' 24'') d'au moins un portemanchons (17 ; 17' ; 17'') qui peut coulisser dans les éléments de guidage (25) , présente, entre ses manchons (24, 24' 24''), un évidement (39) permettant le passage du cylindre de plastification (38), et coiffe l'orifice de passage (11) du porte-moules (10) dans les zones non parcourues par le dit cylindre de plastification (38).

2. Porte-moules selon la revendication 1, caractérisé par le fait que des éléments de guidage (25) sont ancrés dans ledit porte-moules (10) et emprisonnent par-derrière , dans des régions (17a) aplanies par polissage, les bords longitudinaux supérieur et inférieur du porte-manchons (17 ; 17' ; 17'') du type plaque, lequel porte-manchons peut être bloqué sur le porte-moules (10) , à l'aide des éléments de guidage (25) , dans différentes positions prises par coulissement.

3. Porte-moules selon la revendication 2 , caractérisé par le fait qu'un évidement respectif correspondant à un segment de cylindre est prévu, dans les éléments cylindriques de guidage (25) , pour former des surfaces de guidage horizontales (25b) et verticales (25c) ; et par le fait que les éléments de guidage (25) pourvus de brides axiales de centrage (25a sur la figure 5) peuvent être bloqués sur le porte-moules (10) , avec effet de centrage , au moyen de boulons coaxiaux (26).

4. Porte-moules selon la revendication 3 caractérisé par le fait que, lors de l'injection de la matière plastique dans le second moule (34' sur la figure 2) de coulée par injection, sélectivement abloqué, les boulons (26) s'engagent dans des trous taraudés (10c' sur la figure 3) du porte-moules (10) qui sont situés, dans la direction du déplacement, à distance de trous taraudés (10c) dans lesquels lesdits boulons (26) s'engagent lors de l'injection dans le premier moule (34) de coulée par injection.

5. Porte-moules selon l'une des revendications précédentes, caractérisé par le fait qu'une première paire d'éléments (28) à manchons, présentant des manchons (24) ménagés solidairement, et une seconde paire d'éléments (28') à manchons, munis de manchons (24') ménagés solidairement, peuvent être alternativement abloquées, au moyen de boulons de serrage (29), sur des surfaces rectifiées de blocage (17c) du porte-manchons (17) , et peuvent alors être centrées au moyen de tétons de centrage (32) du porte-manchons (17), situés dans un plan vertical (a-a) avec les boulons de serrage (29) , les éléments (28 ; 28') à manchons des deux paires différant les uns des autres par un espacement mutuel différent et/ou par une largeur intérieure différente de leurs manchons.

6. Porte-moules selon l'une des revendications précédentes, caractérisé par le fait que le porte-manchons (17') est réalisé en deux parties, et son évidement (39) est délimité par deux parties identiques dudit porte-manchons.

7. Porte-moules selon l'une des revendications 1 à 4 et 6, caractérisé par le fait que les manchons (24' , 24'') sont venus de moulage solidaire sur les porte-manchons (17' ; 17'') (figures 12-15) .

8. Porte-moules selon la revendication 7, caractérisé par le fait qu'au moins deux porte-manchons (17''), affectés audit porte-moules, diffèrent l'un de l'autre par un espacement mutuel différent et/ou par une largeur intérieure différente de leurs manchons (24'').

9. Porte-moules selon la revendication 7, caractérisé par le fait que deux paires de manchons, façonnées d'un seul bloc sur les porte-manchons (17' ; 17''), diffèrent l'une de l'autre par un espacement mutuel différent et/ou par une largeur intérieure différente de leurs manchons (24', 24'').

10. Porte-moules selon l'une des revendications précédentes, caractérisé par le fait que, lors du coulissement du groupe de moulage par injection, le porte-manchons (17 ; 17' ; 17'') peut coulisser avec jeu dans les éléments de guidage (25) et peut, par suite d'un léger mouvement d'arrêt dans la direction de l'axe d'injection (s-s) , être consigné à demeure dans sa position par blocage avec les surfaces verticales de guidage (25c) .
